# EUROPEAN PATENT SPECIFICATION

(11) **EP 1 834 013 B1**
(45) Date of publication and mention of the grant of the patent: **21.12.2011**
(21) Application number: 05817398.0
(22) Date of filing: 03.11.2005
(51) Int. Cl.: D01D 5/00, D01D 5/11, D01D 5/098

(54) **BLOWING GASES IN ELECTROBLOWING PROCESS**
BLASGASE IM ELEKTROBLASVERFAHREN
SOUFFLAGE DE GAZ DANS UN PROCESSUS D'ELECTROSOUFFLAGE

(30) Priority: 05.11.2004 US 982572
(43) Date of publication of application: 19.09.2007
(73) Proprietor: E.I. DU PONT DE NEMOURS AND COMPANY, Wilmington, DE 19898 (US)
(72) Inventor: HOVANEC, Joseph, Brian, Richmond, Virginia 23223 (US)
(74) Representative: Matthews, Derek Peter
(86) International application number: PCT/US2005/040143
(87) International publication number: WO 2006/052808

(56) References cited:
- WO-A-03/015927
- WO-A-03/080905
- WO-A-2005/026398
- WO-A-2005/033381
- WO-A1-2006/017360
- N.J: PINTO, P CARRION, J.X. QUINONES: "Electroless deposition of nickel on electrospun fibers of 2-acrylamido-2-methyl-1-propanesulfonic acid doped polyaniline.", MATERIALS SCIENCE AND ENGINEERING, vol. A366, 5 February 2004 (2004-02-05), pages 1-5, DOI: 10.1016/j.msea.2003.07.024
- "FAQ - NFPA 30", National Fire Protection Association , 2010, Retrieved from the Internet: URL:http://www.nfpa.org/faq.asp?categoryID =920 [retrieved on 2010-06-11]
- "FLAMMABLE SUBSTANCES & IGNITION TEMPERATURE DEFINITIONS", UCL , 2 April 2007 (2007-04-02), Retrieved from the Internet: URL:http://www.ucl.ac.uk/efd/maintenance/f ire/documents/UCLFire_TN_067.pdf [retrieved on 2010-06-11]
- Thomas Smola: "Brennbare Flüssigkeiten", RÖMPP Online, version 3.6 , May 2004 (2004-05), Retrieved from the Internet: URL:http://www.roempp.com/prod/roempp.php [retrieved on 2010-06-11]

## Description

This invention relates to a method of forming a polymeric nanofiber web via electro-blown spinning or electro-blowing. The nanofiber web of the invention can be incorporated in composite fabrics suited for use in apparel, wipes, hygiene products, filters and surgical gowns and drapes.

Synthetic polymers have been fashioned into very small diameter fibers using various processes including melt spinning, flash spinning, solution blowing, melt blowing, electrostatic spinning and electro-blowing. Webs made from these very small diameter fibers are useful as liquid barrier materials and filters. Often they are combined with other stronger webs into composites for additional strength to meet the needs of the product end use.

In those spinning processes that utilize a flammable solvent in a polymer solution and the solvent comes into contact with air, steps must be taken to minimize the chance of starting and propagating a fire. In the case of electro-blowing, where a flammable solvent from the polymer solution comes into contact with air in the presence of a high voltage charge, there is a need to minimize the fire potential. This is especially important when scaling up from small laboratory processes to large scale commercial production.

### SUMMARY OF THE INVENTION

The present invention is directed to a method as defined in claim 1.

### BRIEF DESCRIPTION OF THE DRAWINGS

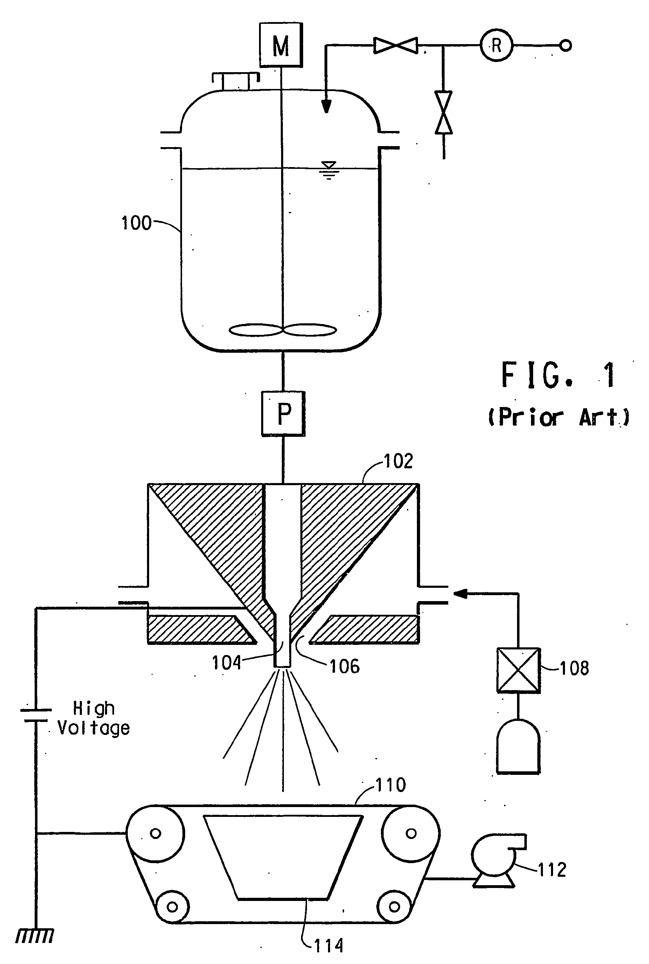

Figure 1 is a schematic diagram of a prior art electro-blowing apparatus for conducting the process of the present invention.

### DETAILED DESCRIPTION OF THE INVENTION

This invention is directed towards an improvement to the method for preparing a nanofiber web using electro-blown spinning (or "electro-blowing") as described in International Publication Number WO2003/080905 (U.S. Serial No. 10/822,325), which is hereby incorporated by reference. This prior art electro-blowing method comprises feeding a solution of a polymer in a solvent to a spinning nozzle to which a high voltage is applied, while compressed air is directed toward the polymer solution in a blowing gas stream as it exits the nozzle to form nanofibers and collecting the nanofibers into a web on a grounded collector under vacuum.

According to the present invention, the compressed air is replaced with a gas or gas mixture that will not support combustion. The presence of molecular oxygen gas in air would support combustion when a flammable solvent is used, a situation which is exacerbated by the presence of a high voltage potential difference between the spinning nozzle and the collector. If any of a variety of process parameters are not adequately controlled, an electrical arc can occur, providing an ignition source. By replacing the blowing air with gases that will not support combustion, the potential for a fire is reduced.

"Nanofibers" means fibers having diameters varying from a few tens of nanometers up to several hundred nanometers, but generally less than one micrometer.

Fig. 1 shows a diagram of a nanofiber web preparing apparatus of the invention for illustrating a nanofiber web preparing process.

A storage tank 100 prepares a polymer solution from dissolution of one or more polymers in one or more solvents. Polymers available for the invention are not restricted to thermoplastic resins, but may utilize most synthetic resins such as thermosetting resins. Examples of the available polymers may include polyimide, nylon, polyaramid, polybenzimidazole, polyetherimide, polyacrylonitrile, poly(ethylene terephthalate), polypropylene, polyaniline, poly(ethylene oxide), poly(ethylene naphthalate), poly(butylene terephthalate), styrene butadiene rubber, polystyrene, poly(vinyl chloride), poly(vinyl alcohol), poly(vinylidene fluoride), poly(vinyl butylene) and copolymer or derivative compounds thereof.

The polymer solution is prepared by selecting a solvent that will dissolve the polymer. Suitable solvents include but are not limited to flammable solvents such as tetrahydrofuran, N-dimethylformamide, dimethylacetamide, acetone and methyl ethyl ketone. Although dissolving most of the polymers may not require any specific temperature ranges, heating may be needed for assisting the dissolution reaction. The polymer solution can be mixed with additives, including any resin compatible with an associated polymer, plasticizer, ultraviolet ray stabilizer, crosslinking agent, curing agent, reaction initiator, etc. Although the apparatus shown in Fig. 1 adopts a compression arrangement that forcibly blows compressed gas into the storage tank 100 in order to force the polymer solution from the storage tank 100, any known means for forcing the polymer solution from the storage tank 100 can be utilized.

The polymer solution is discharged from the storage tank 100 via a spinning nozzle 104 of a spinneret 102 which is electrically insulated and applied with a high voltage. After optionally heating in a gas heater 108, compressed gas comprising a gas or gas mixture (the "blowing gas") that will not support combustion is injected via gas nozzles 106 disposed in sides of the spinning nozzle 104 wherein the gas contacts the polymer solution after the polymer solution exits the spinneret. The polymer solution discharged from the spinning nozzle 104 of the spinneret 102 forms nanofibers that are collected in the form of a web on a collector 110 under the spinning nozzle 104. The collector 110 is grounded, and designed to draw gas through a gas collecting vessel 114, so that gas is drawn through a high voltage region between the spinning nozzle 104 and the collector 110, and by suction of a blower 112. Alternatively, the spinneret 102 can be grounded and the collector 110 can be applied with a high voltage. Also, in place of a collector 110 utilizing suction, an electrostatic charge can be applied to the web to pin it to the collector without the need for suction under the collector. Gas drawn in by the blower 112 contains solvent and thus a Solvent Recovery System (SRS, not shown) is preferably included to recover solvent while recycling gas through the apparatus. The SRS may adopt a well-known construction.

One drawback to the method of the prior art is that when air, which comprises about 21 vol.% molecular oxygen, is used as a blowing gas, a possibility of fire or explosion exists. This is especially a problem due to the presence of a possible ignition source, which can exist if electrical arcing occurs between the spinning nozzle and the collector. The problem is exacerbated when the air is heated, which can act to volatilize the solvent and form flammable and/or explosive vapors. Due to the high polymer solution throughput rate of the electro-blowing process, which can range from 0.1 to 5 mL/min per hole of the spinning nozzle, considerable volumes of vaporized solvent can be created, which can result in a quite hazardous environment if the vaporized solvent concentration reaches or exceeds the lower explosive limit (LEL) in air.

The blowing gas is selected to be a gas or gas mixture which will not support combustion, such as nitrogen, argon, helium, carbon dioxide, hydrocarbons, halocarbons, halohydrocarbons or mixtures thereof. In fact, it is possible to use as a blowing gas only enough of such gases to reduce the molecular oxygen content in the air surrounding the spinning nozzle/collector system to be below the ambient level of approximately 21 vol. %, such that the LEL of any particular flammable solvent in use is elevated to a point which exceeds the likely concentration of such solvent vapors in the reduced oxygen-containing atmosphere surrounding the spinning nozzle/collector system. That is, it is not necessary to completely blanket the spinning operation with the blowing gas, but only with a sufficient volume of such gas to reduce the molecular oxygen content to a safe level, below which combustion cannot be supported, which will vary depending upon the solvent in use and the temperature of the gas. To this end, it may be advantageous to dispose a gas probe within the spinning region between the spinning nozzle and the collector, to draw samples of gas from within that region into an oxygen analyzer to monitor the oxygen concentration within the region.

In another embodiment, the blowing gas itself can include low concentrations of molecular oxygen, so long as the mixture cannot support combustion.

In another embodiment, it would be advantageous to conduct the electro-blowing operation in a sealed system, such that the blowing gas is entirely contained within a sealed spinning vessel. The spinning vessel can be effectively purged of molecular oxygen, at least to a level that would be insufficient to support combustion. In such case, gases that would otherwise present a flammability hazard, such as hydrocarbons or even recycled solvent vapors, could be used as the blowing gas.

The calculation of safe concentrations of molecular oxygen content in the spinning environment is well within the level of skill in the art.

Various substrates can be arranged on the collector to collect and combined a nanofiber web spun on the substrate so that the combined fiber web is used as a high-performance filter, wipe and so on. Examples of the substrate may include various non-woven cloths such as melt-blown non-woven cloth, needle punching and spunlace non-woven cloth, woven cloth, knitted cloth, paper and the like, and can be used without limitations so long as a nanofiber layer can be added on the substrate.

The invention can be conducted under the following process conditions.

Voltage applied to the spinneret 102 is preferably in the range of 1 to 300 kV and more preferably of about 10 to 100 kV. The polymer solution can be discharged under a pressure ranging from 0.01 to 200 kg/cm² (0,981 to 19600 kPa) and in preferably about 0.1 to 20 kg/cm² (9,81 to 1960 kPa). This allows the polymer solution to be discharged by a large quantity in an adequate manner for mass production. The process of the invention can discharge the polymer solution with a high discharge rate of about 0.1 to 5 cc/min-hole as compared with electrostatic spinning methods.

Compressed gas injected via the gas nozzle 106 has a flow velocity of 10 to 10,000 m/min and preferably of about 100 to 3,000 m/min. Gas temperature is preferably in the range of ambient temperature to 300°C and more preferably to about 100°C.

### EXAMPLES

Hereinafter the present invention will be described in more detail in the following examples. An electro-blowing apparatus as described in International Publication Number WO2003/080905 and as is illustrated in Fig. 1, is used.

### EXAMPLE 1

A polymer solution having a concentration of 20 wt % polyacrylonitrile in N-dimethylformamide solvent is prepared and then is spun with the spinneret as shown in Fig. 1. A spinning pressure of 6 kg/cm² (589 kPa) is applied. Nitrogen blowing gas is injected at the lower end of the spinning nozzle at about 1,000 m/min and the oxygen concentration in the spinning region is monitored, such that the flow velocity of nitrogen blowing gas is adjusted to reduce oxygen concentration within the spinning region to below the level at which combustion would be supported. Voltage is applied at 50 kV DC by charging the spinneret and grounding the collector. A web of polyacrylonitrile fibers is collected with an average fiber diameter <1,000 nm.

### EXAMPLE 2

A polymer solution having a concentration of 15 wt % poly(vinylidene fluoride) in acetone solvent is prepared and then is spun with the spinneret as shown in Fig. 1. A spinning pressure of 6 kg/cm² (589 kPa) is applied. Argon blowing gas is injected at the lower end of the spinning nozzle at about 1,000 m/min and the oxygen concentration in the spinning region is monitored, such that the flow velocity of argon blowing gas is adjusted to reduce oxygen concentration within the spinning region to below the level at which combustion would be supported. Voltage is applied at 50 kV DC by charging the spinneret and grounding the collector. A web of poly(vinylidene fluoride) fibers is collected with an average fiber diameter <1,000 nm.

### EXAMPLE 3

The conditions set forth in Example 2 are reproduced, except that the blowing gas is a mixture of 5 vol.% oxygen/95 vol.% nitrogen. The mixed blowing gas is injected at the lower end of the spinning nozzle at 1,000 m/min and the oxygen concentration in the spinning region is monitored, such that the flow velocity of mixed blowing gas is adjusted to reduce oxygen concentration within the spinning region to below the level at which combustion would be supported. Voltage is applied at 50 kV DC by charging the spinneret and grounding the collector. A web of poly(vinylidene fluoride) fibers is collected with an average fiber diameter <1,000 nm.

## Claims

1. A method for preparing a nanofiber web comprising
feeding a polymer solution, which comprises at least one polymer dissolved in at least one flammable solvent, to a spinning nozzle;
discharging the polymer solution from the spinning nozzle into a blowing gas or gas mixture that will not support combustion to form polymer nanofibers, wherein the blowing gas exits a jet at a lower end of the spinning nozzle and wherein the flow velocity of the blowing gas is adjusted to reduce the oxygen concentration in the region surrounding the spinning nozzle/collector system to a level too low to support combustion of said solvent; and
collecting the polymer nanofibers on a collector under the spinning nozzle, wherein an applied high voltage differential is maintained between the spinneret and the collector.

2. The method of claim 1, wherein the blowing gas is selected from the group of nitrogen, argon, helium, carbon dioxide, hydrocarbons, halocarbons, halohydrocarbons and mixtures thereof.

3. The method of claim 1, wherein the polymer is selected from the group of polyimide, nylon, polyaramid, polybenzimidazole, polyetherlmide, polyacrylonitrile, poly(ethylene terephthalate), polypropylene, polyaniline, poly(ethylene oxide), poly(ethylene naphthalate), poly(butylene terephthalate), styrene butadiene rubber, polystyrene, poly(vinyl chloride), poly(vinyl alcohol), poly(vinylidene fluoride), poly(vinyl butylene) and copolymer or derivative compounds thereof.

4. The method of claim 3, wherein the flammable solvent is selected from the group of tetrahydrofuran, N-dimethylformamide, dimethylacetamide, acetone and methyl ethyl ketone.

5. The method of claim 1, wherein a high voltage is applied to the spinning nozzle and is from 1 to 300 kV.

6. The method of claim 1, wherein a high voltage is applied to the collector and is from 1 to 300 kV.

7. The method of claim 1, wherein the polymer solution is compressively discharged through the spinning nozzle under a discharge pressure in the range of 0.01 to 200 kg/cm² (0,981 to 19600 kPa).

8. The method of claim 1, wherein the blowing gas is injected at a flow velocity of 10 to 10,040 m/min and a temperature from ambient to 300°C.

9. The method of claim 4, wherein the blowing gas is injected at a temperature from ambient to 300°C.

10. The method of claim 1, wherein the collector has a substrate disposed thereon for collecting the nanofibers deposited in the form of a web on the substrate.

## Patentansprüche

1. Verfahren für die Herstellung einer Nanofaserbahn, umfassend:
das Zuführen einer Polymerlösung, die mindestens ein Polymer umfasst, das in mindestens einem entzündlichen Lösungsmittel gelöst ist, zu einer Spinndüse;
das Abgeben der Polymerlösung aus der Spinndüse in ein Blasgas oder eine - gasmischung, das/die die Verbrennung nicht fördert, unter Bildung polymerer Nanofasern, wobei das Blasgas einen Strahl aus einer Düse an einem tiefergelegenen Ende der Spinndüse austreten lässt und wobei die Strömungsgeschwindigkeit des Blasgases eingestellt wird, um die Sauerstoffkonzentration in dem die Spinndüse/das Auffangsystem umgebenden Bereich auf ein Niveau zu reduzieren, das zu niedrig ist, um die Verbrennung des Lösungsmittels zu fördern; und
das Auffangen der Polymernanofasern auf einer Auffangvorrichtung unter der Spinndüse, wobei ein aufgebrachtes Hochspannungsdifferential zwischen der Spinnbrause und der Auffangvorrichtung aufrechtgehalten wird.

2. Verfahren nach Anspruch 1, wobei das Blasgas aus der Gruppe ausgewählt ist bestehend aus Stickstoff, Argon, Helium, Kohlendioxid, Kohlenwasserstoffen, Halogenkohlenstoffen, Halogenkohlenwasserstoffen und Mischungen davon.

3. Verfahren nach Anspruch 1, wobei das Polymer aus der Gruppe ausgewählt ist bestehend aus Polyimid, Nylon, Polyaramid, Polybenzimidazol, Polyetherimid, Polyacrylnitril, Poly(ethylenterephthalat), Polypropylen, Polyanilin, Poly(ethylenoxid), Poly(ethylennaphthalat), Poly(butylenterephthalat), Styrolbutadienkautschuk, Polystyrol, Poly(vinylchlorid), Poly(vinylalkohol), Poly(vinylidenfluorid), Poly(vinylbutylen) und Copolymer- oder Derivatverbindungen davon.

4. Verfahren nach Anspruch 3, wobei das entzündliche Lösungsmittel aus der Gruppe ausgewählt ist bestehend aus Tetrahydrofuran, N-Dimethylformamid, Dimethylacetamid, Aceton und Methylethylketon.

5. Verfahren nach Anspruch 1, wobei eine Hochspannung auf die Spinndüse aufgebracht wird und 1 bis 300 KV beträgt.

6. Verfahren nach Anspruch 1, wobei eine Hochspannung auf die Auffangvorrichtung aufgebracht wird und 1 bis 300 KV beträgt.

7. Verfahren nach Anspruch 1, wobei die Polymerlösung komprimierend durch die Spinndüse unter einem Abgabedruck im Bereich von 0,01 bis 200 kg/cm² (0,981 bis 19600 kPa) abgegeben wird.

8. Verfahren nach Anspruch 1, wobei das Blasgas mit einer Strömungsgeschwindigkeit von 10 bis 10.000 m/min und einer Temperatur von der Umgebungstemperatur bis zu 300 °C injiziert wird.

9. Verfahren nach Anspruch 4, wobei das Blasgas bei einer Temperatur von der Umgebungstemperatur bis 300 °C injiziert wird.

10. Verfahren nach Anspruch 1, wobei die Auffangvorrichtung ein Substrat aufweist, das darauf zum Auffangen der Nanofasern angeordnet ist, die in Form einer Bahn auf dem Substrat abgelegt werden.

## Revendications

1. Procédé de préparation d'un voile de nanofibres comprenant
l'amenée d'une solution polymère, qui comprend au moins un polymère dissous dans au moins un solvant inflammable, à une buse de filage;
l'écoulement de la solution polymère de la buse de filage dans un gaz ou un mélange de gaz de soufflage qui n'entretiendra pas la combustion pour former des nanofibres de polymère, le gaz de soufflage faisant sortir un jet à l'extrémité inférieure de la buse de filage et dans lequel le débit de l'écoulement du gaz de soufflage est ajusté afin de réduire la concentration en oxygène dans la région entourant la buse de filage/le système collecteur jusqu'à un niveau trop faible pour entretenir la combustion dudit solvant; et
le recueil des nanofibres de polymère sur un collecteur sous la buse de filage, dans lequel un différentiel de haute tension appliquée est conservé entre la filière et le collecteur.

2. Procédé selon la revendication 1, le gaz de soufflage étant choisi parmi le groupe constitué de l'azote, de l'argon, de l'hélium, du dioxyde de carbone, des hydrocarbures, des halogénocarbures, des hydrocarbures halogénés et de leurs mélanges.

3. Procédé selon la revendication 1, le polymère étant choisi parmi le groupe du polyimide, du nylon, du polyaramide, du polybenzimidazole, du polyétherimide, du polyacrylonitrile, du poly(téréphtalate d'éthylène), du polypropylène, du polyaniline, du poly(oxyde d'éthylène), du poly(naphtalate d'éthylène), du poly(téréphtalate de butylène), du caoutchouc de styrène butadiène, du polystyrène, du poly(chlorure de vinyle), du poly(alcool de vinyle), du poly(fluorure de vinylidène), du poly(vinyl butylène) et d'un copolymère ou des composés dérivés de ceux-ci.

4. Procédé selon la revendication 3, le solvant inflammable étant choisi parmi le groupe constitué du tétrahydrofurane, du N-diméthylformamide, du diméthylacétamide, de l'acétone et de la méthyl éthyl cétone.

5. Procédé selon la revendication 1, une tension élevée étant appliquée à la buse de filage et étant de 1 à 300 kV.

6. Procédé selon la revendication 1, une tension élevée étant appliquée au collecteur et étant de 1 à 300 kV.

7. Procédé selon la revendication 1, la solution polymère étant évacuée avec compression à travers la buse de filage sous une pression de décharge située dans la plage de 0,01 à 200 kg/cm² (0,981 à 19600 kPa).

8. Procédé selon la revendication 1, le gaz de soufflage étant injecté à une vitesse d'écoulement de 10 à 10000 m/min et à une température allant de la température ambiante à 300°C.

9. Procédé selon la revendication 4, le gaz de soufflage étant injecté à une température allant de la température ambiante à 300°C.

10. Procédé selon la revendication 1, le collecteur ayant un substrat disposé dessus pour recueillir les nanofibres déposées sous la forme d'un voile sur le substrat.
